# EUROPEAN PATENT SPECIFICATION

(11) **EP 3 637 730 B1**
(45) Date of publication and mention of the grant of the patent: **06.01.2021**
(21) Application number: 18204828.0
(22) Date of filing: 07.11.2018
(51) Int. Cl.: H04L 29/08

(54) **METHOD AND SYSTEM FOR DISTRIBUTED OPERATION BETWEEN CLOUD AND EDGE IN IOT COMPUTING ENVIRONMENT**
VERFAHREN UND SYSTEM FÜR DEN VERTEILTEN BETRIEB ZWISCHEN CLOUD UND RAND IN EINER IOT-COMPUTING-UMGEBUNG
PROCÉDÉ ET SYSTÈME POUR UNE OPÉRATION DISTRIBUÉE ENTRE UN NUAGE ET UNE PÉRIPHÉRIE DANS UN ENVIRONNEMENT INFORMATIQUE D'IDO

(30) Priority: 10.10.2018 KR 20180120553
(43) Date of publication of application: 15.04.2020
(73) Proprietor: Korea Electronics Technology Institute, Bundang-gu, Seongnam-si Gyeonggi-do 13509 (KR)
(72) Inventor: MOON, Jae Won, Seoul (KR); KUM, Seung Woo, Gyeonggi-do (KR); KIM, Young Kee, Incheon (KR); CHO, Sang Yeon, Seoul (KR)
(74) Representative: Isarpatent

(56) References cited:
- US-A1- 2017 060 574
- US-A1- 2018 159 745
- US-A1- 2018 183 855

## Description

### BACKGROUND

### 1. Field of the Invention

The present invention relates to a method as in claim 1 and system as in claim 6 for performing operations of learning, analysis, inference, and the like in a distributed manner between a cloud and edges.

### 2. Discussion of Related Art

Deployment of Internet of Things (IoT) devices has enabled various data to be collected from IoT sensors at various locations. It is common that result values of the collected sensor data are analyzed in the field in a simple way so as to identify the meanings according to a predetermined rule, the collected data is sent to a cloud for professional and advanced analytics and analyzed in depth, and the results of analytics are sent back to a user. The common technology trend of cloud-based analytics at present is to manage and analyze data in a cloud infrastructure such as Google BigQuery, Amazon Web Services, or the like.

As cloud computing technology advances, data learning and analytics using a cloud are popularized. However, there are several problems as follows.
- Invasion of privacy: As individual data needs to be sent to the cloud, privacy invasion may occur.
- Network dependency: Transmitting data to the cloud means that data should be sent to a physically/logically distant location and a result for the data should be received from the physically/logically distant place. Therefore, services cannot be provided if the network does not function properly.
- Consumption of network resources: Even if the performance of a network is supported, bandwidth consumption is large because a large amount of data needs to be transmitted. When many resources are used, it may be difficult to provide services.
- Response speed: Since the data needs to be sent to and received from a physically distant place, the analytics response becomes slow, and therefore it is difficult to use the cloud analytics for real-time services requiring fast feedback.

Edge computing or fog computing has been introduced as an alternative to overcome the disadvantages of the cloud analytics. An edge, which has been developed to overcome the physical distance and constraints of the cloud, is a system that can be used privately at a location close to where a user is using a service.

The edge may overcome the disadvantages of the cloud by performing necessary functions at a location between the cloud and the user. However, in the conventional edge-cloud cooperation analytics framework, an analytics engine is allotted from the cloud to the edge to merely entrust the edge with use of an analytics model. Accordingly, current edge-based analytics, which are at an early technological development stage, are suitable for general and simple tasks but cannot consider various characteristics of individual edges. Further, the current edge-based analytics depend on a cloud system of a specific company. In addition, the processing performance of the edge is not as good as that of the cloud and it is difficult for the edge to process a large amount of data. Accordingly, it is difficult for the edge to perform complicated computation. Further, since the performance greatly differs from one edge to another, the number and characteristics of tasks that can be operated greatly differ from one edge to another. Therefore, it is difficult to be consistent in allotting models.

Document US 2018/159745 A1 discloses a method for orchestrating cloud to fog interactions.

### SUMMARY OF THE INVENTION

Therefore, there is a need for an operation considering the above-described disadvantages. For example, there is a need for a technique that allows an edge to quickly receive a deep learning model from a cloud, to quickly operate the received model, and to provide Internet of Things (IoT) services such as inference results. The invention is defined by the appended claims.

The configuration and operation of the present invention described above will become more apparent to those of ordinary skill in the art through exemplary embodiments which will be described later with reference to the drawings.

### BRIEF DESCRIPTION OF THE DRAWINGS

The above and other objects, features and advantages of the present invention will become more apparent to those of ordinary skill in the art by describing thereof in detail with reference to the accompanying drawings, in which:
FIG. 1 is a schematic diagram of a cloud and edge-based Internet of Things (IoT) computing environment;
FIG. 2 is a conceptual diagram of a cloud-edge distributed operation method according to Embodiment 1;
FIG. 3 is a configuration diagram of a cloud 10 and an edge 20 for implementing the concept of Embodiment 1 shown in FIG. 2;
FIG. 4 is a conceptual diagram of a cloud-edge distributed operation method according to Embodiment 2;
FIG. 5 is an exemplary configuration diagram of the cloud 10 and the edge 20 for implementing the concept of Embodiment 2 shown in FIG. 4;
FIG. 6 is a conceptual diagram of a cloud-edge distributed operation method according to Embodiment 3; and
FIG. 7 is an exemplary configuration diagram of the cloud 10 and the edge 20 for implementing the concept of Embodiment 3 shown in FIG. 6.

### DETAILED DESCRIPTION OF EXEMPLARY EMBODIMENTS

Advantages and features of the present invention and methods to achieve the same will become apparent from the detailed descriptions of exemplary embodiments herein below with reference to the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art. It is to be noted that the technical scope of the present invention is defined only by the claims.

The terms used in this specification are intended to illustrate the embodiments and are not intended to limit the present invention. In this specification, singular forms include plural forms unless the context clearly dictates otherwise. As used herein, "comprises" or "comprising" indicates presence of stated components, steps, operations and/or devices, and does not exclude the presence or addition of one or more other components, steps, operations and/or devices.

Hereinafter, embodiments of the present invention will be described in detail with reference to the accompanying drawings. In adding reference numerals to elements in each drawing, the same elements will be designated by the same reference numerals, if possible, although they are shown in different drawings. Further, in the following description of the present invention, a detailed description of known functions and configurations incorporated herein will be omitted when it is determined that the description may make the subject matter of the present disclosure rather unclear.

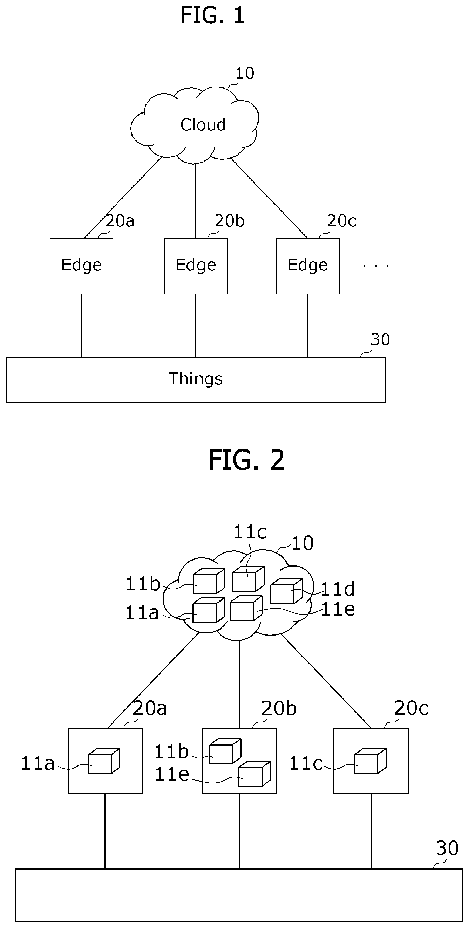

FIG. 1 is a schematic diagram of a cloud and edge-based Internet of Things (IoT) computing environment. The IoT computing environment includes a plurality of edges 20 (20a, 20b, 20c,...) connected to things 30, which represent a comprehensive component including a plurality of IoT sensors (not shown) and a plurality of actuators (not shown), to perform edge computing including receiving various kinds of data from the things and transmitting a control signal to the things; and a cloud 10 configured to receive data from the edges, execute cloud computing, and transmit a result of the execution to the edges.

In a more specific example, the IoT sensors, applications, and user devices in the things side 30 produce a great deal of data (e.g., big data). The edges 20 are fundamentally configured to perform preprocessing such as data (big data) collection from the things 30, data refinement for utilization of the big data, and other data cleaning, sampling, or combination for main operation of the big data, and to transfer a result of the preprocessing to the cloud 30. The functions of the edges 20 may be designed in various ways. For example, the edges 20 may be designed to process data that can be processed by the edges 20 without being sent to the cloud 30, or may be designed to perform only the basic functions and to entrust the cloud 30 with all the core tasks. The cloud 30 mainly performs in-depth learning such as Deep Learning, and analytics inference related thereto, and comprehensively performs a task(s) handed over from the edges 20 or performs core operations such as allotting some tasks to a specific edge 20. The result of the operations performed by the cloud 30 (or the result of the operations performed by the edges 20) is applied to the actuators of the things 30 such that IoT control is performed based on the situation and determination thereof.

In order to implement the method for distributed operation between the cloud and the edges as in the present invention, an allotting scheme or rule for allotting operation between the edges 20 and the cloud 30 is required. The cloud-edge distributed operation method of the present invention may be implemented in various ways depending on the design of the allotting rule.

Three possible embodiments are described below. It will be apparent to those skilled in the art that the present invention may be clearly understood by reference to the following preferred embodiments. It will be appreciated that the invention may be practiced in other specific forms than those described herein without departing from the spirit or essential characteristics thereof. The embodiments described below are intended to be illustrative in all aspects and not restrictive. The scope of protection of the present invention should be defined by the appended claims rather than the following detailed description. Thus, it is intended that the present invention covers all such modifications and variations within the scope of the appended claims and their equivalents.

In the description of the present invention, the term "operation" is used to encompass all the actions of data collection, processing, learning, analytics, and inference which are performed in an edge-cloud-based IoT computing environment. The term "model" or "engine" is used to encompass a learning model (engine), an analytics model (engine) and an inference model (engine) necessary for such IoT operations.

### Embodiment 1 (corresponding to claims 1 to 3, 6 and 7)

Embodiment 1 is about a scheme in which the cloud 10 creates multiple models and allots a part of the created models to the edges 20 to make the edges 20 perform a "lightweight" operation to enable the edge-cloud distributed operation. For simplicity, according to this concept, Embodiment 1 will be referred to as a "selective model allotting technique for utilization of a lightweight model" or "lightweight modeling."

FIG. 2 is a conceptual diagram of a cloud-edge distributed operation method according to Embodiment 1. According to the figure, the cloud 10 creates models or engines 11a, 11b, 11c, 11d, 11e. In the IoT environment, when it is difficult for the edges 20a, 20b, 20c perform the operations of creation and learning/analytics of the models, the cloud 10 creates multiple models (engines) for a main operation, and the edges 20 fetch (or are allotted with) only models the edges 20 can operate and then operate the allotted models.

Allotting of the models from the cloud 10 may be led either by the edges 20 or by the cloud 10, depending on the conditions (processing capability, memory capacity, etc.) of the edges. The type and number of models to be allotted to an edge may depend on the capability of the edge. FIG. 2 illustrates an exemplary case where one model 11a is allotted to the first edge 20a, two models 11b and 11e are allotted to the second edge 20b, and one model 11c is allotted to the third edge 20c.

Since the models created by the cloud 10 include various types such as a large model, a small model, a high performance model, and a low performance model, a model suitable for the capability or capacity of each edge 20 may be selected to obtain a proper operation result. Thereby, the efficiency of the entire IoT computing system may be maximized. That is, to make each edge exhibit the best performance that the edge can achieve, models are allotted to multiple edges for distributed operation.

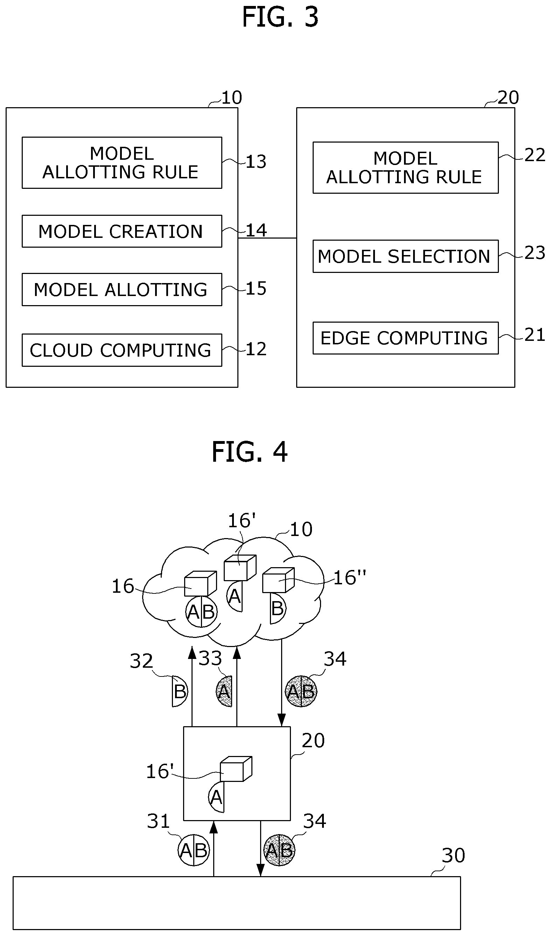

FIG. 3 is a configuration diagram of the cloud 10 and the edge 20 for implementing the concept of Embodiment 1 shown in FIG. 2. Basically, the cloud 10 includes a cloud computing unit 12 configured to perform cloud computing operation and a model creation unit 14 configured to create models. That is, the cloud 10 stores massive data based on its high processing power and storage capacity and creates one or more models for various situations. In addition, the edge 20 includes an edge computing unit 21 configured to perform edge computing operation necessary for the edge 20.

In order to implement the edge-cloud distributed operation according to Embodiment 1, predetermined model allotting rules 13 and 22 may be added to the cloud 10 and the edge 20 and the technique of Embodiment 1 may be implemented based on the rules. A model selection unit 23 of the edge 20 selects a model by determining how to use models created by the cloud 10 according to its own situation, which dynamically changes, using the model allotting rule 22. The model selection unit in the edge 20 may determine operable models and the number thereof by considering two things: 1) a fixed processing capability of the edge 20, and 2) process resources available in real time. Once the edge 20 selects a model through the model selection unit 23, a model allotting rule 13 of the cloud 10 allots the selected model to the edge 20 according to the model allotting rule 13 of the cloud operatively connected to the model allotting rule 22 of the edge. The edge 20 includes an edge computing unit 21 configured to perform edge computing operation to perform an operation using the allotted model.

As described above, by allotting one or more models according to the model allotting rules, each edge 20 may selectively use a predictable lightweight model. Thereby, the prediction rate of the entire IoT system may be increased and all situations may be flexibly coped with.

In the foregoing description and the following description of the embodiments, the elements of the cloud 10 are referred to by the cloud computing unit 12, the model creation unit 14, the model allotting unit 15, and the elements of the edge 20 are referred to by the edge computing unit 21 and the model selection unit 23, by using the term "unit". However, that is merely for simplicity and clarity, and it should be apparent to those skilled in the art that, although such names may imply physical entities or hardware devices, they may refer to non-physical entities, software functions, routines, or operational sub-units, as well as hardware devices. This is the same for Embodiments 2 and 3.

### Embodiment 2 (corresponding to claims 4 and 8)

Embodiment 2 is based on exchange of intermediate data processed by the cloud and the edges. According to this concept, Embodiment 2 may be referred to as an "operation enhancement technique based on cooperation between the cloud and the edges."

In some cases, critical information (such as personal information, photographs, and voice that require privacy protection) should not be sent from things to the cloud. However, in many cases, it is difficult for the edge to process such information due to the size and type of data. This is because the edge generally has low operation capability. To address this issue, the cloud gradually optimizes the analytics engine (model) through learning and distributes the optimized engine (model) to the edge. The edge separates the data collected from the things and performs instant primary learning/analytics or preprocessing on a part of the separated data and selectively sends the data to the cloud. The cloud performs the main operation based on the data received from the edge and quickly delivers a result of determination to the edge. As the data, on which learning or preprocessing is performed by the edge, is transmitted to the cloud such that the data cannot be inversely analyzed, personal information (privacy) may be protected. Further, when a result of primary learning/analytics is sent to the cloud, data smaller than the original data may be transmitted. Therefore, the transmission bandwidth may be saved.

FIG. 4 is a conceptual diagram of a cloud-edge distributed operation method according to Embodiment 2. When the critical information 31 ( 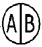 ) is sent from the things 30 to the edge 20, the edge 20 separates the information into parts A and B. A separated part, for example, part B 32 ( 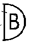 ), is sent to the cloud 10, and the edge 20 performs operation for only the other part (part A) and sends operation-finished part A 33 ( 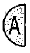 ), which is a result of operation, to the cloud 10. The cloud 10 performs operation based on received separated part B 32 ( 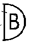 ) and operation-finished part A 33 ( 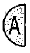 ) and sends a complete operation result 34 ( 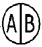 ) to the edge 20. The edge 20 relays the complete processing result to the things 30 as final result data. To this end, previously the cloud 10 creates a model 16 capable of processing the entirety of the critical information 31, a model 16' capable of processing only part A, a model 16" capable of processing only part B and allots the model 16' to the edge 20 to allow the edge 20 to process only part A. That is, the cloud assigns a function matching the operation capability of the edge to that edge, and the function assignment may be defined such that the edge performs only a limited operation. As the edge 20 separates the critical information 31 into parts for cooperation between the edge 20 and the cloud 10 rather than sending the entirety of the critical information 31 to the cloud 10 as described above, the concern about privacy invasion may be eliminated. Therefore, data may need to be separated within a range which ensures that privacy invasion does not occur with separated parts A and B alone.

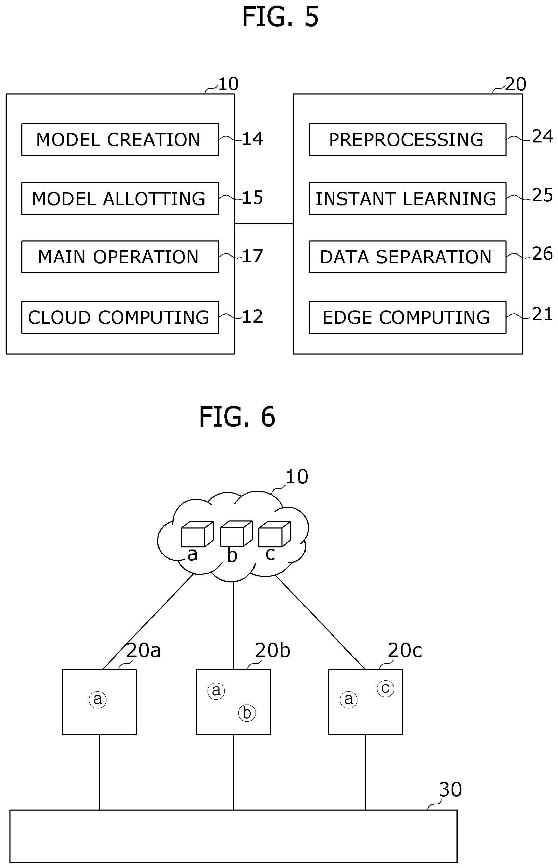

FIG. 5 is an exemplary configuration diagram of the cloud 10 and the edge 20 for implementing the concept of Embodiment 2 shown in FIG. 4.

As in the previous embodiment, the cloud 10 basically includes a cloud computing unit 12 configured to perform cloud computing operation and a model creation unit 14 configured to create models. That is, the cloud 10 stores massive data based on its high processing power and storage capacity and creates one or more models for various situations. In addition, the edge 20 includes an edge computing unit 21 configured to perform computing operation necessary for the edge 20.

In order to implement the cooperation technique according to Embodiment 2, the cloud 10 creates a model through the model creation unit 14 and allots the created model to the edge 20 through the model allotting unit 15. When the edge 20 receives information from the things, the data separation unit 26 separates the information within a range in which privacy problems do not occur and performs instant primary learning/analytics 25 and/or preprocessing 24 on a part of the information. Then, the edge 20 sends, to the cloud 10, the data of the part processed through the instant primary learning/analytics and/or preprocessing. The cloud 10 executes the main operation 17, for example, inference, on this data using the created model.

Here, it should be noted that the instant learning 25, the preprocessing 24 and the main operation 17 are operations performed by the edge computing unit 21 of the edge 20 and the cloud computing unit 12 of the cloud 10, respectively.

In the description of the present embodiment, as described above, elements described with the term "unit" refer to software functions, routines, or operation units, as well as functions of hardware devices.

### Embodiment 3 (corresponding to claims 5, 9 to 11)

In Embodiment 3, multiple tasks to be operated by the cloud are allotted to several edges such that the edges perform the tasks in a distributed manner. Embodiment 3 may be referred to as "modularization of operations which may be independently/inter-operatively performed by the edges."

The cloud creates multiple models responsible for a variety of different functions. An edge may use various models received from the cloud in combination according to its state to perform an operation.

FIG. 6 is a conceptual diagram of a cloud-edge distributed operation method according to Embodiment 3.

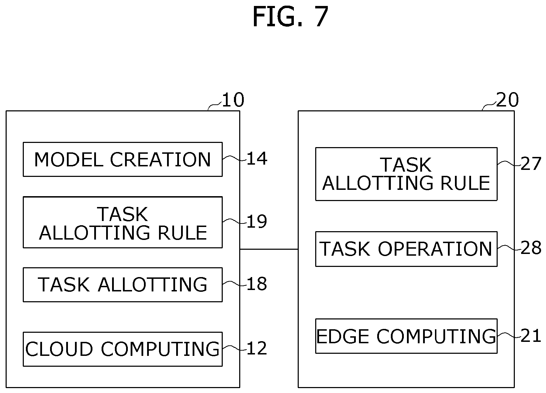

There are several tasks a, b and c to be operated by the cloud 10. For example, suppose that when photograph information is received from the things 30, 'task a' of identifying a person from a photograph, 'task b' of identifying a gender from the photograph, and 'task c' of estimating the age from this photograph are to be operated. There may be models to operate each of the tasks. Due to the capabilities of the edges 20, all of the tasks cannot be operated by one edge 20. Therefore, necessary models are allotted to the edges 20 such that only a necessary or suitable task is operated by each edge 20. Then, tasks to be operated by the respective models are allotted. For example, in FIG. 6, the first edge 20a is configured to operate only task a, the second edge 20b is configured to operate only tasks a and b, and the third edge 20c is configured to operate only tasks a and c. The cloud 10 and the edges 20 cooperate such that each edge operates a task allotted based on a task allotting rule (see FIG. 7).

FIG. 7 is an exemplary configuration diagram of the cloud 10 and the edge 20 for implementing the concept of Embodiment 3 shown in FIG. 6.

As in the previous embodiment, the cloud 10 basically includes a cloud computing unit 12 configured to perform cloud computing (operation) and a model creation unit 14 configured to create models. That is, the cloud 10 stores massive data based on its high processing power and storage capacity and creates one or more models for various situations. In addition, the edge 20 includes an edge computing unit 21 configured to perform computing (operation) necessary for the edge 20.

In order to implement Embodiment 3, predetermined task allotting rules 19 and 27 may be added to the cloud 10 and the edge 20 and the technique of Embodiment 3 may be implemented based on the rules. The edge 20 selects a task to operate among the tasks generated by the cloud 10 (and eventually selects a task operation model to use) according to its own situation using the task allotting rules 27 and is assigned the task from the cloud 10 through a task allotting unit 18. More specifically, once the edge 20 selects a task, the task allotting unit 18 of the cloud 10 allots the selected task (and a corresponding model)) to the corresponding edge 20 according to the task allotting rule 19 of the cloud, which is operatively connected to the task allotting rule 27 of the edge. The edge computing unit 21 of the edge 20 operates the task using the allotted model.

Embodiment 3 differs from Embodiment 1 in that data is not processed by allotting multiple engines (models) for the same purpose in parallel, but tasks for different purposes are operated in a distributed manner using multiple models for the tasks serially. Of course, the task distributed operation capability and range changes depending on a state of the edge (for example, a decision making situation).

In the description of the present embodiment, elements described with the term "unit" refer to software functions, routines, or operation units, as well as functions of hardware devices, as described above.

The invention may be embodied in apparatus form or in a method form. In particular, the function or process of each element in the embodiments of the present invention may be implemented as a hardware element including at least one of a digital signal processor (DSP), a processor, a controller, an application-specific IC (ASIC), a programmable logic device (field-programmable gate array (FPGA) or the like) and a combination thereof. It may also be implemented in software, either in combination with hardware elements or independently. The software may be stored on a computer-readable recording medium.

As described above, according to the present invention, the following advantages may be obtained.

An edge-based distributed intelligence framework may be provided. A framework, which allows analytics operations to be delegated/shared between a cloud and various edges based on fixed/flexible characteristics of the cloud and the edges, derives optimum analytics results through cooperation and is configured considering industrial applicability and applications thereof, may be provided.

Analytics optimization considering resources and characteristics of edges may be implemented. An analytics model, performance, and an analytics range may be adaptively determined based on the characteristics of the edges, which depend on a closed network environment and a domain and have various fixed/flexible capabilities, and may be changed depending on the situation to make use of optimum analytics performance.

Usability of edge analytics may be enhanced. Specifically, by modularizing main functions to easily utilize and distribute an edge-based analytics engine, usability of edge analytics may be enhanced.

Cooperation may be performed between edges and a cloud. Conventionally, the cloud has been an infrastructure for processing of big data, the edge has been a terminal configured to execute a simple service, and the cloud and the edge have independently performed tasks. In addition, the analytics cooperation between the edge and the cloud has been at an early technological development stage in which 1) the cloud unilaterally delegates/allots an inference engine to the edges or 2) an edge learning model is locally optimized with a relatively simple type of user data. According to the present invention, however, the edge and the cloud evolve into a cooperative medium which complements or cooperates with the counterpart device. In addition, through cooperation, advantages of the devices may be maximized and drawbacks of the devices may be redressed, thereby gradually improving the analytics performance.

The present invention may be extended to cooperation between edges. The technique of the present invention may be applied to cooperation such as delegation, selection and allotting of analytics between edges, as well as cooperation between the edges and the cloud.

Thus, it is intended that the present invention covers all such modifications provided they come within the scope of the appended claims.

## Claims

1. A method for distributed operation between a cloud and edges in an Internet of Things IoT, computing environment including the edges and the cloud, the edges being connected to things to collect data from the things and transmit a control signal to the things, and the cloud being configured to receive data from the edges, process the data, and transmit a result of the processing to the edges, the method comprising:
creating, by the cloud, a model for the collected data; wherein the model comprises a learning model, an analytics model and an inference model necessary for IoT operations; wherein the cloud creates models for a main operation and the edges are allotted only models the edges can operate and then operate the allotted models;
preparing an model allotting rule for the created model for distributed operation between the cloud and the edges;
allotting the created model from the cloud to the edges according to the model allotting rule; wherein the type and number of models to be allotted to an edge of the plurality of edges depend on the conditions of each edge; and
processing, by the cloud and the edges, the data collected from things using the created models and the model allotting rule, respectively.

2. The method of claim 1, wherein the allotting of the created model from the cloud to the edges comprises:
determining, by the cloud, an edge based on the model allotting rule to allot the model.

3. The method of claim 1 wherein the allotting of the created model from the cloud to the edges comprises:
selecting, by the edges,
the created model according to the model allotting rule and receiving the created model allotted from the cloud.

4. The method of any one of claims 1 to 3, wherein the processing, by the cloud and the edges, of the data collected from the things using the created model and the model allotted rule comprises:
separating, by the edges, the data collected from the things;
transmitting a first part of the separated data to the cloud and transmitting, to the cloud, a result obtained by primarily processing a second part of the separated data; and
performing, by the cloud, a main operation on the first part of the data received from the edges and on the result obtained by primarily processing the second part of the data at the edges.

5. The method of any one of claims 1 to 3, further comprising:
allotting, from the cloud to the edges, a processing task for the data collected from the things for a task distributed operation between the cloud and the edges; and
operating, by the cloud and the edges, the task for the data collected from the things using the created model and the model allotting rule, respectively.

6. A system for distributed operation between a cloud and edges in an Internet of Things, IoT, computing environment including the edges and the cloud, the system comprising the cloud and the edges, the edges being connected to things to collect data from the things and transmit a control signal to the things, and the cloud being configured to receive data from the edges, process the data, and transmit a result of the processing to the edges,
wherein the cloud comprises:
a model creation unit configured to create models to process the collected data; wherein the model comprises a learning model, an analytics model and an inference model necessary for IoT operations;
wherein the cloud is configured to create models for a main operation and the cloud being configured to allot only models to the edges which the edges can operate and the edges are configured to then operate the allotted models;
a model allotting rule for the created models for distributed operation between the cloud and the edges; wherein the type and number of models to be allotted to an edge of the plurality of edges depend on the conditions of each edge and
a model allotting unit configured to allot a created model to the edges according to the model allotting rule.

7. The system of claim 6, wherein the edges comprise :
a model allotting rule forming a basis for selecting a created model to be used at the edge among the created models; and
a model selection unit configured to select a model to be used at the edge among the models created by the cloud.

8. The system of claim 6 wherein the edges comprise
a data separation unit configured to separate the data collected from the things and transmit a first part of the separated data to the cloud; and
an element configured to primarily process a second part of the separated data and transmit a result of the processing to the cloud,
wherein the cloud further comprises a main operation unit configured to perform a main operation on the first part of the data transmitted from the edges and
on the result obtained by primarily processing the second part of the data at the edges

9. The system of claim 6 wherein the cloud comprises a task allotting unit configured to allot, from the cloud to the edges, a processing task for the data collected from the things for a task distributed operation between the cloud and the edges; wherein the edges comprise a task operation unit configured to operate the task for the data collected from the things using the allotted model.

10. The system of claim 9, wherein the cloud further comprises a task allotting rule forming a basis for allotting a processing task for the data collected from the things to the edges for the task distributed operation with the edges.

11. The system of claim 9, wherein the edges further comprise a task allotting rule forming a basis for allotting, from the cloud to the edges, a processing task for the data collected from the things for the task distributed operation with the cloud.

## Patentansprüche

1. Verfahren für einen verteilten Betrieb zwischen einer Cloud und Rändern in einer Internet of Things (IoT)-Computerumgebung, welche die Ränder und die Cloud umfasst, wobei die Ränder mit Dingen verbunden sind, um Daten von den Dingen zu erfassen und ein Steuersignal an die Dinge zu senden, und die Cloud so eingerichtet ist, dass sie Daten von den Rändern empfängt, die Daten verarbeitet und ein Ergebnis der Verarbeitung an die Ränder sendet, wobei das Verfahren umfasst:
Erstellen, durch die Cloud, eines Modells für die erfassten Daten;
wobei das Modell ein Lernmodell, ein Analysemodell und ein Inferenzmodell umfasst, die für IoT-Operationen erforderlich sind;
wobei die Cloud Modelle für eine Hauptoperation erstellt und den Rändern nur Modelle zugewiesen werden, welche die Ränder betreiben können, und die Ränder dann die zugewiesenen Modelle betreiben;
Erstellen einer Modellzuweisungsregel für das erstellte Modell für den verteilten Betrieb zwischen der Cloud und den Rändern;
Zuweisen des erstellten Modells von der Cloud zu den Rändern gemäß der Modellzuweisungsregel;
wobei die Art und Anzahl der Modelle, die einem Rand der mehreren Ränder zuzuweisen sind, von den Bedingungen jedes Randes abhängen; und
Verarbeiten, durch die Cloud und die Ränder, der von den Dingen erfassten Daten mit Hilfe der erstellten Modelle bzw. der Modellzuweisungsregel.

2. Verfahren nach Anspruch 1, wobei das Zuweisen des erstellten Modells von der Cloud zu den Rändern umfasst:
Bestimmen, durch die Cloud, eines Randes auf der Basis der Modellzuweisungsregel, um das Modell zuzuteilen.

3. Verfahren nach Anspruch 1, wobei das Zuweisen des erstellten Modells von der Cloud zu den Rändern umfasst:
Auswählen, durch die Ränder, des erstellten Modells gemäß der Modellzuweisungsregel und Empfangen des erstellten Modells, das von der Cloud zugewiesen wird.

4. Verfahren nach einem der Ansprüche 1 bis 3, wobei das Verarbeiten, durch die Cloud und die Ränder, der von den Dingen erfassten Daten unter Verwendung des erstellten Modells und der Modellzuweisungsregel umfasst:
Trennen, durch die Ränder, der von den Dingen erfassten Daten;
Senden eines ersten Teils der getrennten Daten an die Cloud und Senden, an die Cloud, eines Ergebnisses, das durch primäres Verarbeiten eines zweiten Teils der getrennten Daten erhalten wird; und
Durchführen, durch die Cloud, einer Hauptoperation an dem ersten Teil der von den Rändern empfangenen Daten und an dem Ergebnis, das durch primäres Verarbeiten des zweiten Teils der Daten an den Rändern erhalten wird.

5. Verfahren nach einem der Ansprüche 1 bis 3, des Weiteren umfassend:
Zuweisen, von der Cloud zu den Rändern, einer Verarbeitungsaufgabe für die von den Dingen erfassten Daten für eine aufgabenverteilte Operation zwischen der Cloud und den Rändern; und
Betreiben, durch die Cloud und die Ränder, der Aufgabe für die von den Dingen erfassten Daten mit Hilfe des erstellten Modells bzw. der Modellzuweisungsregel.

6. System für einen verteilten Betrieb zwischen einer Cloud und Rändern in einer Internet of Things (IoT)-Computerumgebung, welche die Ränder und die Cloud umfasst, wobei das System die Cloud und die Ränder umfasst, wobei die Ränder mit Dingen verbunden sind, um Daten von den Dingen zu erfassen und ein Steuersignal an die Dinge zu senden, und die Cloud so eingerichtet ist, dass sie Daten von den Rändern empfängt, die Daten verarbeitet und ein Ergebnis der Verarbeitung an die Ränder sendet,
wobei die Cloud umfasst:
eine Modellerstellungseinheit, die dafür eingerichtet ist,
Modelle zum Verarbeiten der erfassten Daten zu erstellen;
wobei das Modell ein Lernmodell, ein Analysemodell und ein Inferenzmodell umfasst, die für IoT-Operationen erforderlich sind;
wobei die Cloud so eingerichtet ist, dass sie Modelle für eine Hauptoperation erstellt, und die Cloud so eingerichtet ist, dass sie den Rändern nur Modelle zuweist, welche die Ränder betreiben können, und die Ränder so eingerichtet sind, dass sie dann die zugewiesenen Modelle betreiben;
eine Modellzuweisungsregel für die erstellten Modelle für den verteilten Betrieb zwischen der Cloud und den Rändern;
wobei die Art und Anzahl der Modelle, die einem Rand der mehreren Ränder zuzuweisen sind, von den Bedingungen jedes Randes abhängen, und
eine Modellzuweisungseinheit, die so eingerichtet ist, dass sie den Rändern ein erstelltes Modell gemäß der Modellzuweisungsregel zuweist.

7. System nach Anspruch 6, wobei die Ränder umfassen:
eine Modellzuweisungsregel, die eine Basis für die Auswahl eines erstellten Modells, das an dem Rand zu verwenden ist, unter den erstellten Modellen bildet; und
eine Modellauswahleinheit, die so eingerichtet ist, dass sie ein Modell, das an dem Rand zu verwenden ist, unter den durch die Cloud erstellten Modellen auswählt.

8. System nach Anspruch 6, wobei die Ränder umfassen:
eine Datentrennungseinheit, die so eingerichtet ist, dass sie die von den Dingen erfassten Daten trennt und einen ersten Teil der getrennten Daten an die Cloud sendet; und
ein Element, das so eingerichtet ist, dass es primär einen zweiten Teil der getrennten Daten verarbeitet und ein Ergebnis der Verarbeitung an die Cloud sendet,
wobei die Cloud des Weiteren eine Hauptoperationseinheit umfasst, die so eingerichtet ist, dass sie eine Hauptoperation an dem ersten Teil der von den Rändern gesendeten Daten und an dem Ergebnis, das durch primäres Verarbeiten des zweiten Teils der Daten an den Rändern erhalten wird, durchführt.

9. System nach Anspruch 6, wobei die Cloud umfasst:
eine Aufgabenzuweisungseinheit, die so eingerichtet ist, dass sie, von der Cloud zu den Rändern, eine Verarbeitungsaufgabe für die von den Dingen erfassten Daten für die aufgabenverteilte Operation zwischen der Cloud und den Rändern zuweist;
wobei die Ränder eine Aufgabenoperationseinheit umfassen, die so eingerichtet ist, dass sie die Aufgabe für die von den Dingen erfassten Daten unter Verwendung des zugewiesenen Modells betreibt.

10. System nach Anspruch 9, wobei die Cloud des Weiteren umfasst:
eine Aufgabenzuweisungsregel, die eine Basis für das Zuweisen einer Verarbeitungsaufgabe für die von den Dingen erfassten Daten zu den Rändern für den aufgabenverteilten Betrieb mit den Rändern bildet.

11. System nach Anspruch 9, wobei die Ränder des Weiteren umfassen:
eine Aufgabenzuweisungsregel, die eine Basis für das Zuweisen, von der Cloud zu den Rändern, einer Verarbeitungsaufgabe für die von den Dingen erfassten Daten für die aufgabenverteilte Operation mit der Cloud bildet.

## Revendications

1. Procédé permettant un fonctionnement réparti entre un nuage et des périphéries dans un environnement informatique d'Internet des objets, IoT (*Internet of Things*), incluant les périphéries et le nuage,
les périphéries étant connectées à des objets pour collecter des données à partir des objets et émettre un signal de commande vers les objets, et le nuage étant conçu pour recevoir des données en provenance des périphéries, traiter les données, et transmettre un résultat du traitement aux périphéries, le procédé comprenant les étapes suivantes :
créer, au moyen du nuage, un modèle pour les données collectées ; dans lequel le modèle comprend un modèle d'apprentissage, un modèle d'analytique et un modèle de déduction nécessaires à des opérations d'IoT ; dans lequel le nuage crée des modèles destinés à une opération principale et les périphéries ne se voient attribuer que des modèles que les périphéries peuvent exploiter et exploitent ensuite les modèles attribués ;
préparer une règle d'attribution de modèles pour le modèle créé, aux fins d'un fonctionnement réparti entre le nuage et les périphéries ;
attribuer le modèle créé, à partir du nuage aux périphéries, en fonction de la règle d'attribution de modèles ; dans lequel le type et le nombre de modèles à attribuer à une périphérie de la pluralité de périphéries sont fonction des conditions de chaque périphérie ; et
traiter, au moyen du nuage et des périphéries, les données collectées à partir d'objets, à l'aide des modèles créés et de la règle d'attribution de modèles, respectivement.

2. Procédé selon la revendication 1, dans lequel l'attribution du modèle créé, à partir du nuage aux périphéries, comprend l'étape suivante :
déterminer, au moyen du nuage, une périphérie sur la base de la règle d'attribution de modèles pour attribuer le modèle.

3. Procédé selon la revendication 1, dans lequel l'attribution du modèle créé, à partir du nuage aux périphéries, comprend les étapes suivantes :
sélectionner, au moyen des périphéries, le modèle créé, en fonction de la règle d'attribution de modèles et recevoir le modèle créé attribué à partir du nuage.

4. Procédé selon l'une quelconque des revendications 1 à 3, dans lequel le traitement, au moyen du nuage et des périphéries, des données collectées à partir des objets, à l'aide du modèle créé et de la règle d'attribution de modèles, comprend les étapes suivantes :
séparer, au moyen des périphéries, les données collectées à partir des objets ;
transmettre une première partie des données séparées au nuage et transmettre, au nuage, un résultat obtenu à un traitement primaire d'une seconde partie des données séparées ; et
effectuer, au moyen du nuage, une opération principale sur la première partie des données reçues en provenance des périphéries et sur le résultat obtenu au traitement primaire de la seconde partie des données au niveau des périphéries.

5. Procédé selon l'une quelconque des revendications 1 à 3, comprenant en outre les étapes suivantes :
attribuer, à partir du nuage aux périphéries, une tâche de traitement des données collectées à partir des objets pour un accomplissement réparti de tâche entre le nuage et les périphéries ; et
accomplir, au moyen du nuage et des périphéries, la tâche pour les données collectées à partir des objets, à l'aide du modèle créé et de la règle d'attribution de modèles, respectivement.

6. Système permettant un fonctionnement réparti entre un nuage et des périphéries dans un environnement informatique d'Internet des objets, IoT, incluant les périphéries et le nuage, le système comprenant le nuage et les périphéries, les périphéries étant connectées à des objets pour collecter des données à partir des objets et émettre un signal de commande vers les objets, et le nuage étant conçu pour recevoir des données en provenance des périphéries, traiter les données, et transmettre un résultat du traitement aux périphéries,
dans lequel le nuage comprend :
une unité de création de modèles, conçue pour créer des modèles afin de traiter les données collectées ; dans lequel le modèle comprend un modèle d'apprentissage, un modèle d'analytique et un modèle de déduction nécessaires à des opérations d'IoT ;
dans lequel le nuage est conçu pour créer des modèles destinés à une opération principale, le nuage étant conçu pour n'attribuer aux périphéries que des modèles que les périphéries peuvent exploiter et les périphéries sont conçues pour exploiter ensuite les modèles attribués ;
une règle d'attribution de modèles destinée aux modèles créés, aux fins d'un fonctionnement réparti entre le nuage et les périphéries ; dans lequel le type et le nombre de modèles à attribuer à une périphérie de la pluralité de périphéries sont fonction des conditions de chaque périphérie et ;
une unité d'attribution de modèle conçue pour attribuer un modèle créé aux périphéries, en fonction de la règle d'attribution de modèles.

7. Système selon la revendication 6, dans lequel les périphéries comprennent :
une règle d'attribution de modèles servant de base à la sélection d'un modèle créé, à utiliser au niveau la périphérie, parmi les modèles créés ; et
une unité de sélection de modèle, conçue pour sélectionner un modèle à utiliser au niveau de la périphérie, parmi les modèles créés par le nuage.

8. Système selon la revendication 6, dans lequel les périphéries comprennent :
une unité de séparation de données, conçue pour séparer les données collectées à partir des objets et pour transmettre une première partie des données séparées au nuage ; et
un élément conçu pour soumettre à un traitement primaire une seconde partie des données séparées et pour transmettre un résultat du traitement au nuage,
dans lequel le nuage comprend en outre une unité d'opération principale conçue pour effectuer une opération principale sur la première partie des données transmises par les périphéries et sur le résultat obtenu au traitement primaire de la seconde partie des données au niveau des périphéries.

9. Système selon la revendication 6, dans lequel le nuage comprend :
une unité d'attribution de tâche, conçue pour attribuer, à partir du nuage aux périphéries, une tâche de traitement des données collectées à partir des objets, aux fins d'un accomplissement réparti de tâche entre le nuage et les périphéries ;
dans lequel les périphéries comprennent :
une unité d'accomplissement de tâche, conçue pour accomplir la tâche pour les données collectées à partir des objets, à l'aide du modèle attribué.

10. Système selon la revendication 9, dans lequel le nuage comprend en outre :
une règle d'attribution de tâche servant de base à l'attribution d'une tâche de traitement des données collectées à partir des objets aux périphéries, aux fins de l'accomplissement réparti de tâche avec les périphéries.

11. Système selon la revendication 9, dans lequel les périphéries comprennent en outre :
une règle d'attribution de tâche servant de base à l'attribution, à partir du nuage aux périphéries, d'une tâche de traitement des données collectées à partir des objets, aux fins de l'accomplissement réparti de tâche avec le nuage.
